# DEMANDE DE BREVET EUROPEEN

(11) **EP 4 375 846 A1**
(43) Date de publication de la demande: **29.05.2024**
(21) Numéro de dépôt: 23209503.4
(22) Date de dépôt: 13.11.2023
(51) Int. Cl.: G06F 15/78

(54) **SYSTÈME SUR PUCE COMPORTANT UN SYSTÈME D'ISOLATION DES RESSOURCES ET PROCÉDÉ DE GESTION DE L'ISOLATION DES RESSOURCES CORRESPONDANT**

(30) Priorité: 25.11.2022 FR 2212349
(71) Demandeur: STMicroelectronics (ALPS) SAS, 38000 Grenoble (FR); STMicroelectronics (Grand Ouest) SAS, 72100 Le Mans (FR); STMicroelectronics (Rousset) SAS, 13790 Rousset (FR)
(72) Inventeur: CHERUEL, Fabrice, 72700 SAINT GEORGES DU BOIS (FR); DAVIDESCU, Dragos, 13410 LAMBESC (FR); ANQUET, Nicolas, 38000 GRENOBLE (FR)
(74) Mandataire: Casalonga

(57) **Abrégé**

Le système sur puce (SOC) comporte :
- au moins un domaine de microprocesseur (CPU_DMN) comportant un microprocesseur (CPU) et au moins une ressource (RES) ; et
- un système d'isolation des ressources (RIF) comportant un module de filtrage (RIS) pour chaque ressource et configuré pour détecter une violation de droits d'accès de sécurité (SEC, NSEC), de privilège (PRIV, NPRIV), et de compartimentation (CID) de la ressource, par des transactions arrivant à la ressource (RES).

Le module de filtrage (RIS) est configuré, en cas de violation d'au moins un droit d'accès de la ressource par une transaction, pour générer un premier signal d'erreur (ILAC_SEC, ILAC_PRIV, ILAC_CID) représentatif du droit d'accès violé de la ressource, et un deuxième signal d'erreur (ILAC_TRS_SEC, ILAC_TRS_CID) représentatif d'au moins un droit d'accès de cette transaction (TRS_SEC, TRS_CID).

## Description

Des modes de réalisation et de mise en oeuvre concernent les techniques d'isolation des ressources appartenant à un système sur puce, prévues pour des raisons de sécurité et/ou de sureté.

En effet, en matière de sureté, par exemple pour contribuer à garantir la fiabilité d'un système sur puce, ou en matière de sécurité, par exemple pour contribuer à protéger des informations tenues secrètes, il peut être prévu de restreindre l'accès d'un ou de plusieurs équipements maîtres à des ressources esclaves spécifiques. Une telle restriction est désignée par l'homme du métier sous le vocable anglosaxon de « isolation ».

Par exemple, la publication FR 3103586 A1 (28/05/2021) décrit une technique de gestion de ces restrictions d'accès simple à mettre en oeuvre et à implémenter, en particulier lorsque cette gestion est dynamique, c'est-à-dire qu'elle dépend de différentes applications du système sur puce.

En particulier, des systèmes sur puces adaptés à la sécurité comportent classiquement un environnement sécurisé et un environnement non-sécurisé, chaque environnement pouvant avoir un état privilégié ou non-privilégié. En outre, les ressources (par exemple des dispositifs maîtres et des dispositifs esclaves) de ce type de système sur puce peuvent être isolées selon des compartimentations. Ces trois dimensions « sécurité-privilège-compartimentation » permettent d'isoler certaines ressources en matière de sûreté ou de sécurité. Pour accéder aux ressources, des règles sont définies en fonction de « droits d'accès » correspondant à un triplet « sécurité-privilège-compartimentation » pour chaque ressource.

Si les règles de droits d'accès sont violées, il est important de le notifier pour enregistrer l'événement et prendre les mesures nécessaires. La détection et le traitement des accès illégaux, par exemple tels que décrits dans la publication FR 3103586 A1 (28/05/2021), permettent de détecter de telles violations.

Cela étant, dans les techniques d'isolations conventionnelles, la gestion des événements d'accès illégaux est centralisée par une unité de traitement centrale d'un « domaine de confiance » (par exemple l'environnement sécurisé à l'état privilégié d'un microprocesseur central dit « de confiance »).

Selon un exemple classique dans une architecture à plusieurs microprocesseurs « asymétrique » (c'est-à-dire où l'un des microprocesseurs est considéré hiérarchiquement supérieur aux autres en matière de sécurité et est qualifié « de confiance »), la communication des événements d'accès illégaux entre le microprocesseur de confiance et les autres est typiquement complexe et ralentie par des latences fonctionnelles.

Selon un autre exemple classique dans une architecture à plusieurs microprocesseurs « symétrique » (c'est-à-dire où les microprocesseurs n'ont pas de hiérarchie particulière entre eux et où aucun n'est qualifié « de confiance »), la communication des événements d'accès illégaux peut ne pas être possible car l'objectif est typiquement de fournir des domaines de microprocesseurs complètement indépendants.

Ainsi, il existe un besoin de fournir une solution permettant de distribuer les événements de violation de droits d'accès aux microprocesseurs et systèmes d'exploitation respectivement concernés par ces événements.

Des modes de réalisation et de mise en oeuvre proposent de générer de nouveaux signaux par un système d'isolation des ressources afin d'identifier quelles sont les propriétés (de sécurité, de privilège, et/ou de compartimentation) des droits d'accès en cause lors d'un événement de violation des droits d'accès d'une ressource.

Des modes de réalisation et de mise en oeuvre proposent de générer de nouvelles interruptions par le système d'isolation des ressources vers le ou les microprocesseurs, afin d'informer le logiciel d'exploitation (« OS » pour « Operating System » en anglais) concerné de l'existence et des propriétés d'un événement de violation des droits d'accès.

Selon un aspect, il est proposé un système sur puce comportant :
- au moins un domaine de microprocesseur comportant un microprocesseur et au moins une ressource ; et
- un système d'isolation des ressources comportant un module de filtrage pour chaque ressource et configuré pour détecter une violation de droits d'accès de sécurité, de privilège, et éventuellement de compartimentation de la ressource, par des transactions arrivant à la ressource,
le module de filtrage étant configuré, en cas de violation d'au moins un droit d'accès de la ressource par une transaction, pour générer un premier signal d'erreur représentatif du droit d'accès violé de la ressource, et un deuxième signal d'erreur représentatif d'au moins un droit d'accès de cette transaction.

On notera en en effet que l'aspect défini ci-dessus peut s'appliquer sans prévoir nécessairement des droits d'accès de compartimentation.

Par exemple, le deuxième signal d'erreur est avantageusement représentatif d'au moins un droit d'accès autre que ledit droit d'accès violé de la ressource. Par exemple, le deuxième signal d'erreur est avantageusement représentatif au moins du droit d'accès de sécurité de la transaction. Par exemple, le deuxième signal d'erreur est avantageusement représentatif des droits d'accès de sécurité et de compartimentation de la transaction.

Les droits d'accès de sécurité et les droits d'accès de privilège sont des notions bien connue de l'homme du métier. Par exemple, pour un microprocesseur en mode sécurisé, un logiciel d'exploitation peut être utilisé avec des ressources qui ne sont pas accessibles dans un mode non-sécurisé. Dans le mode privilégié, le microprocesseur peut bénéficier de droits privilégiés pour des accès à des ressources qu'il n'aura pas dans le mode non-privilégié.

Le droit d'accès de compartimentation permet par exemple de définir une assignation d'au moins un équipement maître à certaines au moins des ressources (esclaves), ou bien une assignation de certaines au moins des ressources à au moins un équipement maître. Le droit d'accès de compartimentation s'applique en particulier lorsque le système sur puce comporte plusieurs domaines de microprocesseur, mais également plusieurs équipements maîtres dans un même domaine, tels que par exemple un microprocesseur et un circuit d'accès direct en mémoire « DMA » (pour « Direct Memory Access » en anglais).

Ainsi, le premier signal d'erreur et le deuxième signal d'erreur, combinés à la connaissance des règles d'isolation définies par les droits d'accès, permet avantageusement de déduire si l'événement de violation des droits d'accès s'est produit entre l'environnement sécurisé et l'environnement non-sécurisé, ou entre l'état privilégié et l'état non-privilégié dans l'environnement non-sécurisé, ou entre l'état privilégié et l'état non-privilégié dans l'environnement sécurisé, et encore l'identification de la provenance de la transaction en cause de l'événement.

Selon un mode de réalisation, le système d'isolation des ressources comporte en outre une unité de gestion d'accès illégaux configurée pour coder, à partir du premier signal d'erreur et du deuxième signal d'erreur, dans un registre de statuts accessible en lecture par le microprocesseur, une violation des droits d'accès de sécurité d'une ressource, une violation des droits d'accès de privilège d'une ressource d'un environnement sécurisé, et une violation des droits d'accès de privilège d'une ressource d'un environnement non-sécurisé.

Selon un mode de réalisation, l'unité de gestion d'accès illégaux est configurée pour communiquer une première interruption à un environnement non-sécurisé du microprocesseur, et/ou une deuxième interruption à un environnement sécurisé du microprocesseur, en fonction du cas détecté de violation des droits d'accès.

Selon un mode de réalisation, l'unité de gestion d'accès illégaux est configurée pour générer la première interruption en cas de violation des droits d'accès d'une ressource de l'environnement non-sécurisé, et pour générer la deuxième interruption en cas de violation des droits d'accès d'une ressource de l'environnement sécurisé.

Selon un mode de réalisation, ledit module de filtrage est configuré, en cas de violation des droits d'accès de sécurité et/ou de privilège d'une ressource par une transaction, pour générer le deuxième signal d'erreur représentatif du droit d'accès de sécurité de cette transaction.

Selon un mode de réalisation, le système sur puce comporte le premier domaine de microprocesseur et au moins un deuxième domaine de microprocesseur, et les ressources dudit premier domaine de microprocesseur et dudit au moins un deuxième domaine de microprocesseur ont des droits d'accès de compartimentation respectifs.

Selon un mode de réalisation, le premier domaine de microprocesseur est qualifié de confiance, et l'unité de gestion d'accès illégaux est configurée pour coder dans le registre de statuts, accessible en lecture par le microprocesseur dudit premier domaine de confiance, chacun desdits cas de violation des droits d'accès d'une ressource de l'un quelconque desdits domaines, par une transaction engagée depuis l'un quelconque desdits domaines.

Selon un mode de réalisation, l'unité de gestion d'accès illégaux est configurée pour communiquer ladite première interruption et ladite deuxième interruption au microprocesseur dudit premier domaine de confiance.

Selon un mode de réalisation, l'unité de gestion d'accès illégaux est configurée pour coder dans un registre de statuts respectivement dédiée à chacun des domaines, accessible en lecture par le microprocesseur du domaine respectif, chacun desdits cas de violation des droits d'accès d'une ressource de l'un quelconque desdits domaines, par une transaction engagée depuis ledit domaine respectif.

Selon un mode de réalisation, l'unité de gestion d'accès illégaux est configurée pour communiquer ladite première interruption et ladite deuxième interruption au microprocesseur dudit domaine respectif.

Selon un mode de réalisation, le premier domaine de microprocesseur est qualifié de confiance, et l'unité de gestion d'accès illégaux est configurée pour communiquer une troisième interruption au microprocesseur du premier domaine de confiance, en cas de détection d'une violation des droits d'accès de compartimentation.

Selon un mode de réalisation, ledit module de filtrage est configuré, en cas de violation des droits d'accès de sécurité et/ou de privilège d'une ressource par une transaction, pour générer le deuxième signal d'erreur représentatif en outre du droit d'accès de compartimentation de cette transaction.

Selon un autre aspect, il est proposé un procédé de gestion de l'isolation de ressources d'un système sur puce, dans lequel :
- le système sur puce comprend au moins un domaine de microprocesseur comportant un microprocesseur et au moins une ressource ; et
- le procédé comprend, pour chaque ressource, une détection d'une violation de droits d'accès de sécurité, de privilège, et éventuellement de compartimentation de la ressource, par des transactions arrivant à la ressource,
et, en cas de violation d'au moins un droit d'accès de la ressource par une transaction, une génération d'un premier signal d'erreur représentatif du droit d'accès violé de la ressource, et d'un deuxième signal d'erreur représentatif d'au moins un droit d'accès de cette transaction.

Selon un mode de mise en oeuvre, le procédé comprend en outre un codage, à partir du premier signal d'erreur et du deuxième signal d'erreur, dans un registre de statuts accessible en lecture par le microprocesseur, d'une violation des droits d'accès de sécurité d'une ressource, d'une violation des droits d'accès de privilège d'une ressource d'un environnement sécurisé, et d'une violation des droits d'accès de privilège d'une ressource d'un environnement non-sécurisé.

Selon un mode de mise en oeuvre, le procédé comprend en outre une communication d'une première interruption à un environnement non-sécurisé du microprocesseur, et/ou d'une deuxième interruption à un environnement sécurisé du microprocesseur, en fonction du cas détecté de violation des droits d'accès.

Selon un mode de mise en oeuvre, la première interruption est générée en cas de violation des droits d'accès d'une ressource de l'environnement non-sécurisé, et la deuxième interruption est générée en cas de violation des droits d'accès d'une ressource de l'environnement sécurisé.

Selon un mode de mise en oeuvre, en cas de violation des droits d'accès de sécurité et/ou de privilège d'une ressource par une transaction, le deuxième signal d'erreur est représentatif du droit d'accès de sécurité de cette transaction.

Selon un mode de mise en oeuvre, le système sur puce comporte le premier domaine de microprocesseur et au moins un deuxième domaine de microprocesseur, et les ressources dudit premier domaine de microprocesseur et dudit au moins un deuxième domaine de microprocesseur ont des droits d'accès de compartimentation respectifs.

Selon un mode de mise en oeuvre, le premier domaine de microprocesseur étant qualifié de confiance, ledit codage est fait dans le registre de statuts accessible en lecture par le microprocesseur dudit premier domaine de confiance, pour chacun desdits cas de violation des droits d'accès d'une ressource de l'un quelconque desdits domaines, par une transaction engagée depuis l'un quelconque desdits domaines.

Selon un mode de mise en oeuvre, les communications de ladite première interruption et de ladite deuxième interruption sont faites au microprocesseur dudit premier domaine de confiance.

Selon un mode de mise en oeuvre, ledit codage est fait dans un registre de statuts respectivement dédiée à chacun des domaines, accessible en lecture par le microprocesseur du domaine respectif, pour chacun desdits cas de violation des droits d'accès d'une ressource de l'un quelconque desdits domaines, par une transaction engagée depuis ledit domaine respectif.

Selon un mode de mise en oeuvre, les communications de ladite première interruption et de ladite deuxième interruption sont faites au microprocesseur dudit domaine respectif.

Selon un mode de mise en oeuvre, le premier domaine de microprocesseur étant qualifié de confiance, le procédé comprend en outre une communication d'une troisième interruption au microprocesseur du premier domaine de confiance, en cas de détection d'une violation des droits d'accès de compartimentation.

Selon un mode de mise en oeuvre, en cas de violation des droits d'accès de sécurité et/ou de privilège d'une ressource par une transaction, le deuxième signal d'erreur est en outre représentatif du droit d'accès de compartimentation de cette transaction.

D'autres avantages et caractéristiques de l'invention apparaîtront à l'examen de la description détaillée de mode de réalisation et de mise en oeuvre, nullement limitatifs, et des dessins annexés, sur lesquels :
[Fig. 1] et
[Fig. 2] et
[Fig. 3] et
[Fig. 4] et
[Fig. 5A] et
[Fig. 5B] et
[Fig. 5C] et
[Fig. 6] et
[Fig. 7A] et
[Fig. 7B] et
[Fig. 8] et
[Fig. 9] illustrent des modes de réalisation et de mise en oeuvre de l'invention.

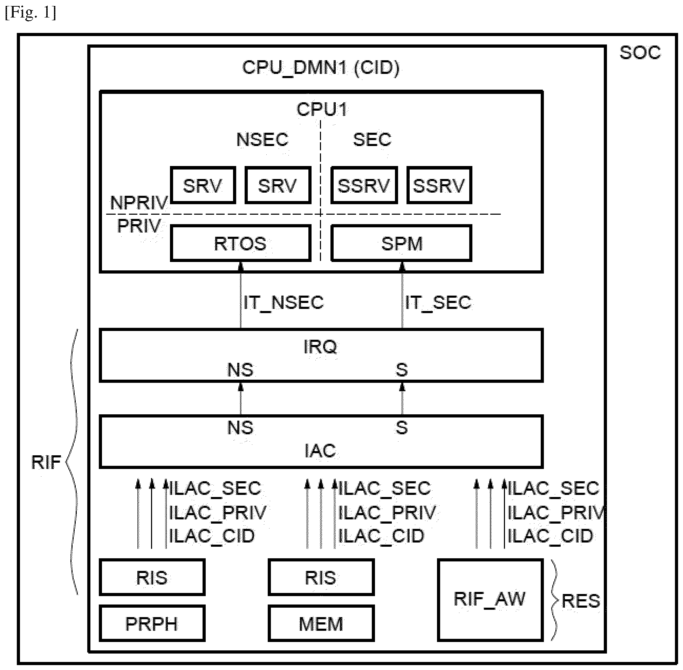

La figure 1 illustre un exemple de système sur puce SOC comportant un domaine de microprocesseur CPU_DMN1 et un système d'isolation des ressources RIF.

Le domaine de microprocesseur CPU_DMN1 comporte une unité de traitement centrale CPU1, appelée microprocesseur, et une ou plusieurs ressources PRPH, MEM, RIF_AW, que l'on nommera également ressource RES.

Par exemple les ressources RES du système sur puce SOC peuvent comporter des périphériques PRPH du type I²C (« Inter Integrated Circuit »), du type SPI (« Serial Peripheral Interface), du type UART (« Universal Asynchronous Receiver Transmitter), ou encore des mémoires MEM interne ou des interfaces pour mémoires externes.

Le microprocesseur CPU 1 comporte un environnement sécurisé SEC et un environnement non-sécurisé NSEC, pouvant avoir cumulativement un état privilégié PRIV ou non-privilégié NPRIV.

Par exemple, des services sécurisés SSRV et des services SRV peuvent être implémentés dans l'état non-privilégié NPRIV des environnements sécurisé SEC et non-sécurisé NSEC ; un logiciel d'exploitation en temps réel RTOS (par exemple pour une commande temps réel d'un dispositif externe) peut être implémenté dans le domaine non-sécurisé NSEC à l'état privilégié PRIV, et la partie logicielle qui traite de la gestion de l'environnement sécurisé SPM peut être implémentée dans le domaine sécurisé SEC à l'état privilégié PRIV.

En outre, une identification de compartimentation CID permet par exemple de définir une assignation du microprocesseurs CPU 1 (ou d'un autre équipement maître du système sur puce SOC, tel que par exemple un circuit d'accès direct en mémoire « DMA ») à certaines au moins des ressources PRPH, MEM, RIF_AW, ou bien une assignation de certaines au moins des ressources PRPH, MEM, RIF_AW au microprocesseur (ou à un autre équipement maître).

Les trois dimensions sécurité SEC, privilège PRIV, et compartimentation CID permettent d'isoler certaines ressources RES pour des raisons de sûreté ou de sécurité.

Pour accéder aux ressources RES, des règles sont définies en fonction de « droits d'accès » correspondant à un triplet sécurité SEC, privilège PRIV, compartimentation CID, pour chaque ressource RES.

Les dispositifs maîtres du domaine CPU_DMN1, c'est-à-dire par exemple le microprocesseur CPU1, sont aptes à engager une transaction avec les dispositifs esclaves du domaine CPU_DMN1, c'est-à-dire les ressources RES.

Une transaction a par exemple les mêmes droits d'accès sécurité SEC, privilège PRIV, compartimentation CID que le dispositif maître qui l'a générée.

Les transactions sont communiquées sur un bus de circuit intégré (non-représenté), usuellement un bus du type « AHB » (pour « Advanced High-performance Bus » en anglais), et, d'un point de vue plus global, via un réseau d'interconnexion du système sur puce SOC.

Le système d'isolation des ressources RIF est configuré pour mettre en oeuvre une isolation des ressources en fonction des droits d'accès de sécurité SEC, NSEC, de privilège PRIV, NPRIV, et de compartimentation CID de chaque ressource PRPH, MEM, RIF_AW. Le système d'isolation des ressources RIF est notamment capable de détecter une violation desdits droits d'accès par des transactions arrivant auxdites ressources.

Le système d'isolation des ressources RIF comporte à cet égard un module de filtrage RIS pour chaque ressource PRPH, MEM, ainsi que par exemple notamment une unité de gestion d'accès illégaux IAC et une unité de gestion d'interruptions IRQ.

Le module de filtrage RIS peut par exemple être réalisé par un circuit dédié, situé entre la ressource PRPH, MEM respectif et le réseau d'interconnexion ou le bus « AHB », ou bien de façon intégrée à la ressource RIF_AW, cette dernière pouvant alors être qualifiée « consciente de l'isolation des ressources ».

Le système d'isolation des ressources RIF n'est pas exclusivement dédié à un domaine de microprocesseur CPU_DMN1, et, dans le cas où le système sur puce SOC comporte plusieurs domaines, le système d'isolation des ressources RIF est commun auxdits plusieurs domaines et permet notamment de mettre en oeuvre l'isolation des ressources entre domaines respectifs.

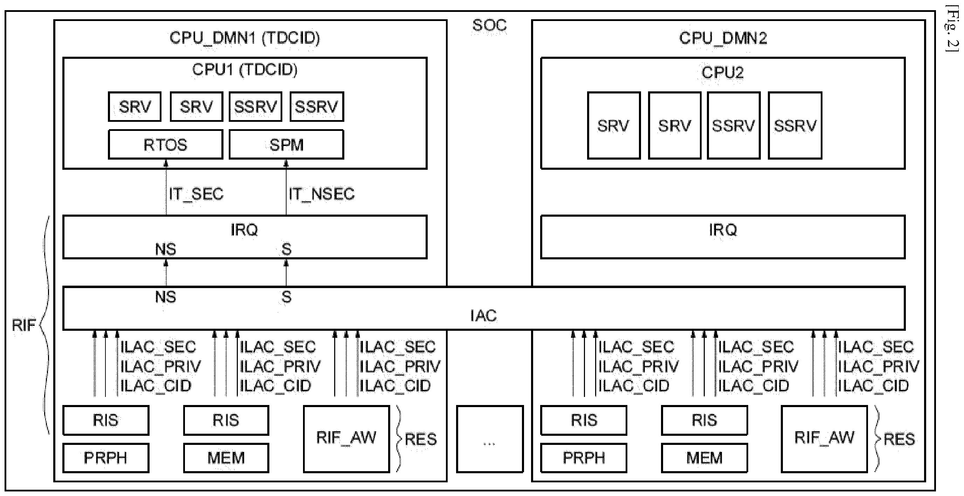

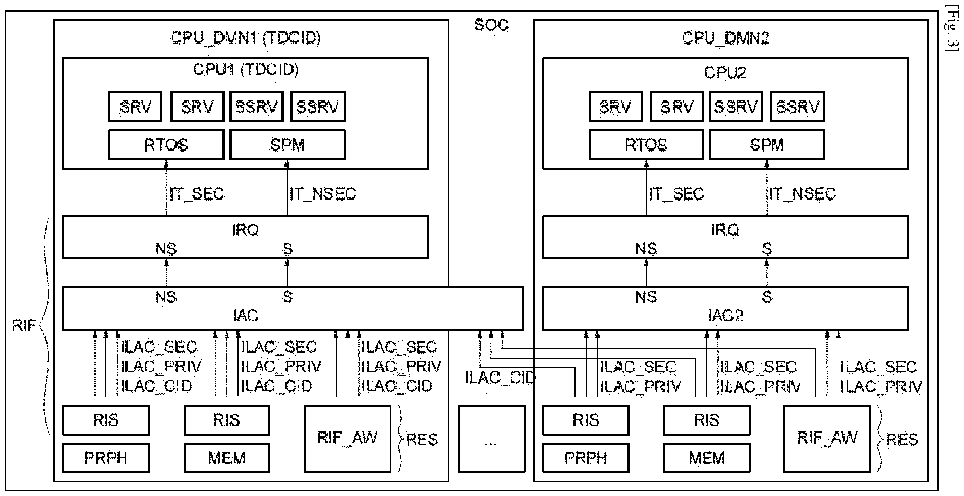

On se réfère aux figures 2 et 3, illustrant des exemples ou le système sur puce SOC, tel que décrit en relation avec la figure 1, comporte le premier domaine de microprocesseur CPU_DMN1 et en outre au moins un deuxième domaine de microprocesseur CPU_DMN2. On pourra qualifier de « multi-coeurs » ces cas de systèmes sur puce SOC comportant plusieurs microprocesseurs CPU1, CPU2.

Les ressources dudit premier domaine de microprocesseur CPU_DMN1 et dudit au moins un deuxième domaine de microprocesseur CPU_DMN2 peuvent avoir des droits d'accès de compartimentation CID1, CID2, respectifs pour chaque domaine.

Le cas de la figure 2 correspond à une architecture multi-coeurs « asymétrique » dans laquelle le deuxième microprocesseur CPU2 n'est prévu que pour fournir des services non-privilégié (NPRIV), dans les environnements non-sécurisé SRV ou sécurisé SSRV. Alternativement, l'asymétrie peut venir du fait que le deuxième microprocesseur CPU2 ne serait prévu que pour fournir des services non-sécurisés (NSEC), selon des états non-privilégié ou privilégié.

En conséquence, le premier microprocesseur CPU1 a une capacité d'isolation supérieure au deuxième microprocesseur CPU2, et le premier microprocesseur CPU1, ainsi que le premier domaine CPU_DMN1, sont qualifiés « de confiance » TDCID.

Le cas de la figure 3 correspond quant à lui à une architecture multi-coeurs « symétrique » dans laquelle le deuxième microprocesseur CPU2 est de configuration sensiblement identique à celle du premier microprocesseur CUP1, en particulier en ce qui concerne la configuration des environnements sécurisé/non-sécurisé et cumulativement des état privilégié/non-privilégié.

Par exemple, la description faite jusqu'ici en relation avec les figures 1 à 3 des systèmes d'isolation des ressources RIF peut correspondre à la technique d'isolation des ressources décrite dans la publication FR 3103586 A1 (28/05/2021) à laquelle l'homme du métier pourra se référer à toute fin utile.

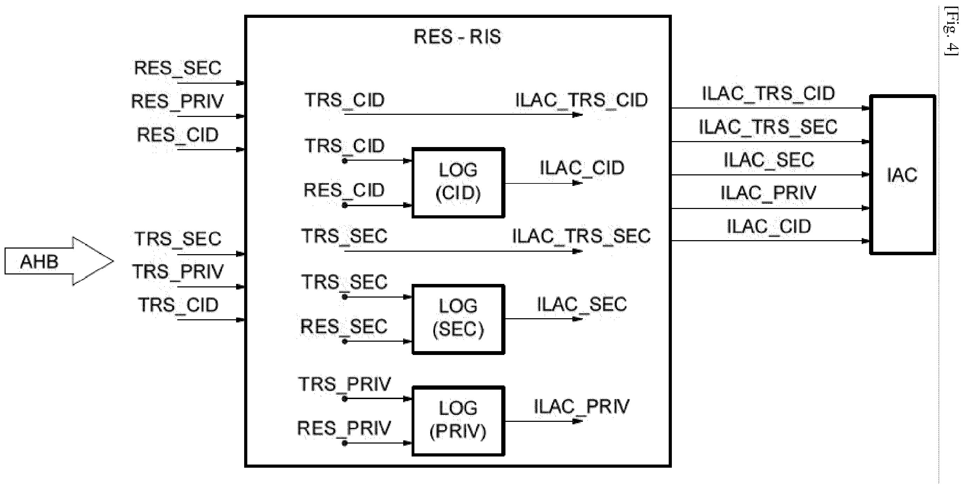

En outre, dans chacun des cas des figures 1 à 3, le module de filtrage RIS de chaque ressource est avantageusement configuré, en cas de violation d'au moins un droit d'accès de la ressource par une transaction, pour générer un premier signal d'erreur ILAC_SEC, ILAC_PRIV, ILAC_CID représentatif du droit d'accès violé de la ressource, et un deuxième signal d'erreur ILAC_TRS_SEC, ILAC_TRS_CID (figure 4) représentatif d'au moins un droit d'accès de cette transaction TRS_SEC, TRS_CID (figure 4).

Par exemple, le deuxième signal d'erreur TRS_SEC, TRS_CID peut être représentatif d'au moins un droit d'accès autre que ledit droit d'accès violé de la ressource ILAC_SEC, ILAC_PRIV, ILAC_CID. Par exemple, le deuxième signal d'erreur ILAC_TRS_SEC est avantageusement représentatif au moins du droit d'accès de sécurité de la transaction TRS_SEC. Par exemple, le deuxième signal d'erreur ILAC_TRS_CID peut également être représentatif du droit d'accès de compartimentation de la transaction TRS_CID. Par exemple, on pourra considérer que « le deuxième signal d'erreur » contient à la fois le signal d'erreur ILAC_TRS_SEC représentatif du droit d'accès de sécurité de la transaction TRS_SEC et le signal d'erreur ILAC_TRS_CID représentatif du droit d'accès de compartimentation de la transaction TRS_CID.

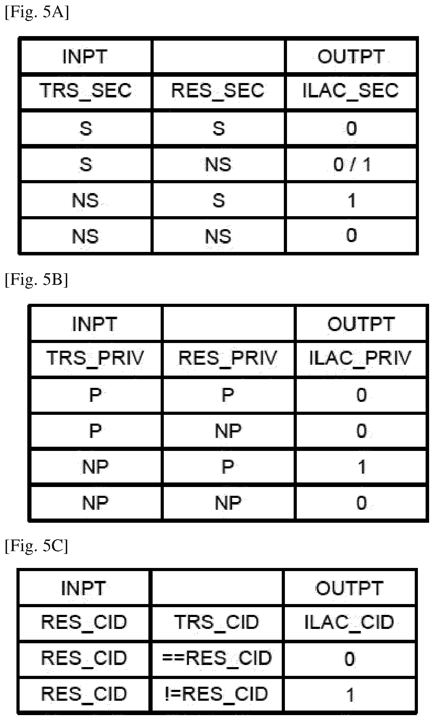

Le mécanisme mis en oeuvre par le module de filtrage RIS sera décrit plus en détail ci-après en relation avec la figure 4 et les figures 5A-5C.

Les signaux d'erreur ILAC_SEC, ILAC_PRIV, ILAC_CID, ILAC_TRS_SEC, ILAC_TRS_CID peuvent être communiqués à l'unité de gestion d'accès illégaux IAC.

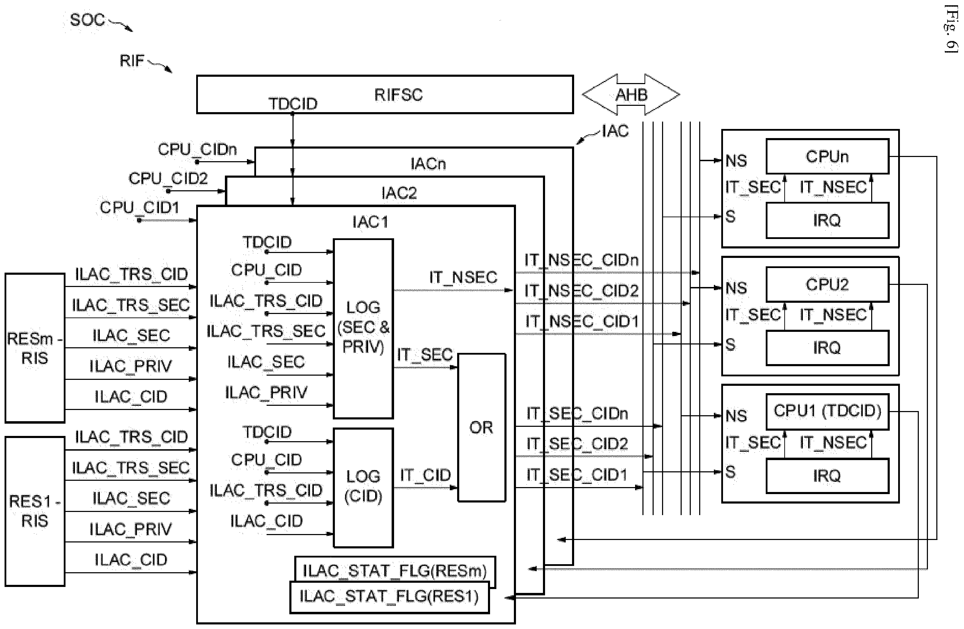

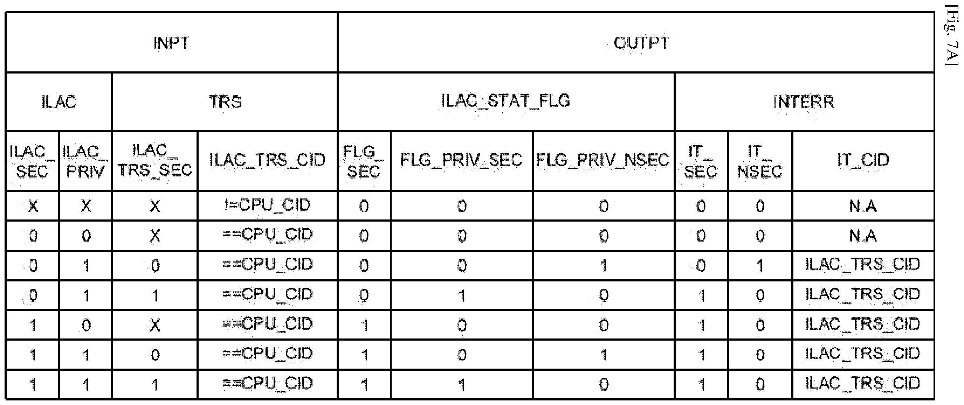

A partir desdits signaux d'erreur ILAC_SEC, ILAC_PRIV, ILAC_CID, ILAC_TRS_SEC, ILAC_TRS_CID, l'unité de gestion d'accès illégaux IAC est avantageusement configurée pour coder, dans un registre de statuts ILAC_STAT_FLG (figure 6) accessible en lecture par le microprocesseur CPU1, une information numérique (par exemple sur 3 bits) représentative des cas suivants de violations, pouvant être cumulés : une violation des droits d'accès de sécurité d'une ressource FLG_SEC ; une violation des droits d'accès de privilège d'une ressource d'un environnement sécurisé FLG_PRIV_SEC ; et une violation des droits d'accès de privilège d'une ressource d'un environnement non-sécurisé FLG_PRIV_NSEC (figure 7A).

En outre, en fonction du ou des cas détecté(s) de violation des droits d'accès FLG_SEC, FLG_PRIV_SEC, FLG_PRIV_NSEC, l'unité de gestion d'accès illégaux IAC est avantageusement configurée pour communiquer, par exemple via l'unité de gestion d'interruptions IRQ, une première interruption IT_NSEC à l'environnement non-sécurisé NSEC du microprocesseur concerné CPU1/CPU2, et/ou une deuxième interruption IT_SEC à l'environnement sécurisé SEC du microprocesseur concerné CPU1/CPU2.

Dans le cas de la figure 1, le microprocesseur concerné est le seul microprocesseur CPU1 du système sur puce SOC. Dans le cas de la figure 2, le microprocesseur concerné peut être le premier microprocesseur de confiance CPU1. Dans le cas de la figure 3, le microprocesseur concerné CPU1/CPU2 peut être celui qui appartient au domaine CPU_DMN1/CPU_DMN2 duquel est issue la transaction ayant causé la violation ou éventuellement au domaine de confiance TDCID.

Ainsi, le système d'isolation des ressources RIF décrit ci-dessus permet avantageusement de directement notifier l'environnement pertinent du microprocesseur concerné, selon la violation de droits d'accès particulière détectée.

En d'autres termes, le système d'isolation des ressources RIF est capable d'élaborer une information d'identification précise et de la communiquer à l'entité maître la mieux qualifiée pour prendre mesure et gérer la violation, et notamment sans avoir systématiquement recours à l'environnement sécurisé à l'état privilégié.

Le mécanisme mis en oeuvre par l'unité de gestion d'accès illégaux IAC sera décrit plus en détail ci-après en relation avec la figure 6 et les figures 7A-7B.

La figure 4 illustre un exemple de l'un des modules de filtrage RIS dédiés à chaque ressource RES, pour générer les premiers signaux d'erreur ILAC_SEC, ILAC_PRIV, ILAC_CID et les deuxièmes signaux d'erreur ILAC_TRS_SEC, ILAC_TRS_CID.

Cet exemple s'inscrit en particulier, mais pas nécessairement, dans le contexte d'une architecture multi-coeurs symétrique décrit en relation avec la figure 3.

D'une part, le système d'isolation des ressource RIF est configuré pour fournir au module de filtrage RIS les informations sur les niveaux de droit d'accès de sécurité RES_SEC, de privilège RES_PRIV et de compartimentation RES_CID de la ressource RES respective.

D'autre part, le module de filtrage RIS peut par exemple être connecté entre le bus AHB acheminant les transactions et la ressource RES, de manière à acquérir les informations sur les niveaux de droit d'accès de sécurité TRS_SEC, de privilège TRS_PRIV et de compartimentation TRS_CID des transactions arrivant à cette ressource RES.

Le module de filtrage RIS comporte un premier circuit logique LOG (SEC), configuré pour générer le premier signal d'erreur relatif au droit d'accès de sécurité ILAC_SEC, de manière conditionnée par la valeur du droit d'accès de sécurité de la ressource RES_SEC et par la valeur du droit d'accès de sécurité de la transaction TRS_SEC.

On se réfère à la figure 5A pour décrire les opérations logiques du premier circuit logique LOG (SEC).

Les droits d'accès de sécurité de la ressource RES_SEC et de la transaction TRS_SEC peuvent avoir une valeur S représentative du niveau sécurisé, ou une valeur NS représentative du niveau non-sécurisé. Cette valeur est par exemple codée sur 1 bit.

Le premier circuit logique LOG (SEC) est configuré selon la table de vérité de la figure 5A, c'est-à-dire de manière à générer en sortie OUTPT le signal d'erreur ILAC_SEC à une première valeur, par exemple « 1 », lorsque les entrées INPT communiquent qu'une transaction TRS_SEC de niveau non-sécurisé NS est parvenue à la ressource RES_SEC de niveau sécurisé S.

En outre, lorsque la ressource RES est une mémoire MEM, le signal d'erreur ILAC_SEC est généré à la première valeur « 1 », lorsque les entrées INPT communiquent qu'une transaction TRS_SEC de niveau sécurisé S est parvenue à la ressource RES_SEC de niveau non-sécurisé NS.

Le signal d'erreur ILAC_SEC n'est pas généré, ou bien est généré à une deuxième valeur, par exemple « 0 », dans les autres cas possibles sur les valeurs d'entrée INPT.

On se réfère de nouveau à la figure 4.

Le module de filtrage RIS comporte un deuxième circuit logique LOG (PRIV), configuré pour générer le premier signal d'erreur relatif au droit d'accès de privilège ILAC_PRIV, de manière conditionnée par la valeur du droit d'accès de privilège de la ressource RES_PRIV et par la valeur du droit d'accès de privilège de la transaction TRS_PRIV.

On se réfère à la figure 5B pour décrire les opérations logiques du deuxième circuit logique LOG (PRIV).

Les droits d'accès de privilège de la ressource RES_PRIV et de la transaction TRS_PRIV peuvent avoir une valeur P représentative du niveau privilégié, ou une valeur NP représentative du niveau non-privilégié NS. Cette valeur est par exemple codée sur 1 bit.

Le deuxième circuit logique LOG (PRIV) est configuré selon la table de vérité de la figure 5B, c'est-à-dire de manière à générer en sortie OUTPT le signal d'erreur ILAC_PRIV à la première valeur « 1 », lorsque les entrées INPT communiquent qu'une transaction TRS_SEC de niveau non-sécurisé NS est parvenue à la ressource RES_SEC de niveau sécurisé S.

Le signal d'erreur ILAC_SEC n'est pas généré, ou bien est généré à la deuxième valeur « 0 », dans les autres cas possibles sur les valeurs d'entrée INPT.

On se réfère de nouveau à la figure 4.

Le module de filtrage RIS comporte un troisième circuit logique LOG (CID), configuré pour générer le premier signal d'erreur relatif à une violation de la compartimentation ILAC_CID, de manière conditionnée par l'identifiant de compartimentation de la ressource RES_CID et par l'identifiant de compartimentation de la transaction TRS_CID.

On se réfère à la figure 5C pour décrire les opérations logiques du troisième circuit logique LOG (CID).

Le deuxième circuit logique LOG (CID) est configuré selon la table de vérité de la figure 5C, c'est-à-dire de manière à générer en sortie OUTPT le signal d'erreur ILAC_CID à la première valeur « 1 », lorsque les entrées INPT communiquent que l'identifiant de compartiment de la transaction TRS_CID n'est pas le même que celui de la ressource « !=RES_CID ».

Le signal d'erreur ILAC_CID n'est pas généré, ou bien est généré à la deuxième valeur « 0 », lorsque l'identifiant de compartiment de la transaction TRS_CID est le même que celui de la ressource

### « ==RES_CID ».

On se réfère de nouveau à la figure 4.

Le module de filtrage RIS est en outre configuré pour transférer la valeur S, ou NS, du droit d'accès de sécurité de la transaction TRS_SEC pour fournir le deuxième signal d'erreur ILAC_TRS_SEC.

Le module de filtrage RIS peut aussi être configuré pour transférer l'identifiant de compartimentation de la transaction TRS_CID pour fournir le deuxième signal d'erreur ILAC_TRS_CID.

On notera en particulier que module de filtrage RIS est configuré, en cas de violation des droits d'accès de privilège PRIV, NPRIV de la ressource par une transaction, pour générer le deuxième signal d'erreur ILAC_SEC représentatif du droit d'accès de sécurité de cette transaction ILAC_TRS_SEC.

Ainsi, il sera en particulier possible, par exemple par l'unité de gestion d'accès illégaux IAC, de distinguer si une violation des droits d'accès de privilège PRIV/NPRIV se produit dans l'environnement sécurisé SEC ou non-sécurisé NSEC.

Il sera en outre possible de distinguer plus particulièrement si une transaction illégale sur le plan du droit d'accès de privilège provient d'un environnement sécurisé.

On se réfère à cet égard aux figures 6 et 7A-7B.

La figure 6 illustre un exemple de réalisation du système d'isolation des ressources RIF, en particulier de l'unité de gestion d'accès illégaux IAC.

Cet exemple s'inscrit en particulier, mais pas nécessairement, dans le contexte d'une architecture multi-coeurs symétrique décrit en relation avec la figure 3.

Dans cet exemple, le système sur puce SOC comporte un nombre « n » de microprocesseurs CPU1, CPU2, CPUn et de domaines associés, et ayant chacun un identifiant de compartimentation respectif CPU_CID1, CPU_CID2, CPU_CIDn ; et un nombre « m » de ressources RES1, RESm ayant chacune un module de filtrage RIS tel que décrit précédemment en relation avec la figure 4.

L'unité de gestion d'accès illégaux IAC reçoit et traite les premiers et deuxièmes signaux d'erreur ILAC_SEC, ILAC_PRIV, ILAC_CID, ILAC_TRS_SEC, ILAC_TRS_CID en provenance de tous les modules de filtrage RIS des différentes ressources RES1 - RESm, d'une manière dédiée à chaque domaine de microprocesseur, par exemple par des sous-unités de gestion d'accès illégaux IAC1, IAC2, IACn respectives à chaque domaine.

En pratique, les sous-unités de gestion d'accès illégaux IAC1, IAC2, IACn ne sont pas nécessairement sectorisées dans le circuit de gestion d'accès illégaux IAC global.

L'unité de gestion d'accès illégaux IAC peut comporter un circuit logique LOG (SEC & PRIV) de gestion des violations de sécurité et de privilège, et un circuit logique LOG (CID) de gestion des violations de compartimentation.

A partir desdits signaux d'erreur ILAC_SEC, ILAC_PRIV, ILAC_CID, ILAC_TRS_SEC, ILAC_TRS_CID, l'unité de gestion d'accès illégaux IAC (le circuit logique « LOG (SEC & PRIV) ») est avantageusement configurée pour coder, dans un registre de statuts ILAC_STAT_FLG, une information numérique (par exemple sur 3 bits) représentative au moins des cas suivants de violations, éventuellement cumulés : une violation des droits d'accès de sécurité d'une ressource FLG_SEC ; une violation des droits d'accès de privilège d'une ressource d'un environnement sécurisé FLG_PRIV_SEC ; et une violation des droits d'accès de privilège d'une ressource d'un environnement non-sécurisé FLG_PRIV_NSEC (figure 7A).

Par exemple, le registre de statuts ILAC_STAT_FLG comporte des sous-registre respectivement dédiés à chacune des ressources RES1 - RESm. Par exemple, le registre de statuts ILAC_STAT_FLG est accessible en lecture par le microprocesseur CPU1 - CPUn appartenant au même domaine que la sous-unité de gestion d'accès illégaux IAC1 - IACn.

En outre, l'unité de gestion d'accès illégaux IAC est configurée pour communiquer une première interruption IT_NSEC et/ou une deuxième interruption IT_SEC à l'environnement non-sécurisé NSEC ou sécurisé SEC du microprocesseur CPU1, en fonction du cas détecté de violation des droits d'accès FLG_SEC, FLG_PRIV_SEC, FLG_PRIV_NSEC (voir Figure 7A).

L'unité de gestion d'accès illégaux IAC peut plus particulièrement être configurée pour communiquer ladite première interruption IT_NSEC_CID1 - IT_NSEC_CIDn et ladite deuxième interruption IT_SEC_CID1 - IT_SEC_CIDn, respectivement à l'environnement non-sécurisé NS et à l'environnement sécurisé S du microprocesseur CPU1 - CPUn du domaine correspondant à la transaction en cause de la violation.

Comme mentionné précédemment, les interruptions IT_NSEC_CID1 - IT_NSEC_CIDn, IT_SEC_CID1 - IT_SEC_CIDn peuvent être communiqué via le bus AHB et via l'unité de gestion d'interruptions IRQ, en particulier via des environnements respectivement non-sécurisé NS et sécurisé S de l'unité de gestion d'interruptions IRQ.

On se réfère à la figure 7A pour décrire les opérations logiques du circuit logique LOG (SEC & PRIV) de gestion des violations de sécurité et de privilège de l'unité IAC.

Ledit circuit logique LOG (SEC & PRIV) est configuré selon la table de vérité de la figure 7A, c'est-à-dire de manière à générer deux types de sorties OUTPT, à partir des signaux d'erreurs susmentionnés en entrée INTP.

On rappelle que les premiers signaux d'erreur ILAC sont représentatifs d'une violation de la sécurité de la ressource si ILAC_SEC=1 et/ou d'une violation du privilège de la ressource si ILAC_PRIV=1.

On rappelle que l'un des deuxièmes signaux d'erreur TRS est représentatif du droit d'accès de sécurité de la transaction TRS_SEC, de niveau sécurisé S si ILAC_TRS_SEC=1 et non-sécurisé NS si ILAC_TRS_SEC=0 ; et que l'autre des deuxièmes signaux d'erreur TRS est représentatif de l'identifiant de compartimentation de la transaction ILAC_TRS_CID, c'est-à-dire l'identifiant de compartimentation CPU_CID1-CPU_CIDn (figure 6) du domaine duquel est issue cette transaction.

D'une part, les sorties OUTPT du circuit logique LOG (SEC & PRIV) comportent ladite information numérique du registre de statuts ILAC_STAT_FLG, par exemple codée sur 3 bits, représentative des cas de violations susmentionnés, c'est-à-dire : une violation des droits d'accès de sécurité d'une ressource si un premier bit FLG_SEC est à « 1 » ; une violation des droits d'accès de privilège d'une ressource d'un environnement sécurisé si un deuxième bit FLG_PRIV_SEC est à « 1 » ; et une violation des droits d'accès de privilège d'une ressource d'un environnement non-sécurisé si un troisième bit FLG_PRIV_NSEC est à « 1 ».

D'autre part, les sorties OUTPT du circuit logique LOG (SEC & PRIV) comportent ladite première interruption IT_NSEC et ladite deuxième interruption IT_SEC générées lorsqu'à la valeur « 1 » et communiquées au domaine correspondant à l'identifiant de compartimentation IT_CID communiqué dans le deuxième signal d'erreur ILAC_TRS_CID.

La première ligne de la table de vérité de la figure 7A signifie qu'aucune sortie OUTPT n'est générée lorsque l'identifiant de compartimentation de la transaction ILAC_TRS_CID ne correspond pas à celui du domaine « !=CPU_CID » de cette sous-unité de gestion IAC1-IACn.

La deuxième ligne de la table de vérité de la figure 7A signifie qu'aucune sortie OUTPT n'est générée lorsqu'aucune violation n'est détectée ILAC_SEC=0, ILAC_PRIV=0 pour cette ressource.

La troisième ligne de la table de vérité de la figure 7A signifie qu'en sortie OUTPT, l'interruption de l'environnement non-sécurisée est générée IT_NSEC=1 et le registre de statuts ILAC_STAT_FLG comporte un code représentatif d'une violation du privilège d'une ressource non-sécurisée FLG_PRIV_NSEC=1 ; lorsqu'en entrée INPT, il y a violation de privilège ILAC_PRIV=1 mais pas de sécurité ILAC_SEC=0, par une transaction non-sécurisée ILAC_TRS_SEC=0.

La quatrième ligne de la table de vérité de la figure 7A signifie qu'en sortie OUTPT, l'interruption de l'environnement sécurisée est générée IT_SEC=1 et le registre de statuts ILAC_STAT_FLG comporte un code représentatif d'une violation du privilège d'une ressource sécurisée FLG_PRIV_SEC=1 ; lorsqu'en entrée INPT, il y a violation de privilège ILAC_PRIV=1 mais pas de sécurité ILAC_SEC=0, par une transaction sécurisée ILAC_TRS_SEC=1.

La cinquième ligne de la table de vérité de la figure 7A signifie qu'en sortie OUTPT, l'interruption de l'environnement sécurisée est générée IT_SEC=1 et le registre de statuts ILAC_STAT_FLG comporte un code représentatif d'une violation de la sécurité d'une ressource FLG_SEC=1 ; lorsqu'en entrée INPT, il y a violation de sécurité ILAC_SEC=1 mais pas de privilège ILAC_PRIV=0, par une transaction de sécurité quelconque ILAC_TRS_SEC=X.

La sixième ligne de la table de vérité de la figure 7A signifie qu'en sortie OUTPT, l'interruption de l'environnement sécurisée est générée IT_SEC=1 et le registre de statuts ILAC_STAT_FLG peut comporter un code représentatif d'une violation de la sécurité et du privilège d'une ressource non-sécurisée FLG_SEC=1, FLG_PRIV_NSEC=1 ; lorsqu'en entrée INPT, il y a violation de sécurité ILAC_SEC=1 et de privilège ILAC_PRIV=1, par une transaction non-sécurisée ILAC_TRS_SEC=0.

Cela étant, dans ce cas en pratique, on pourra de ne pas coder la violation du privilège de la ressource (c'est-à-dire FLG_SEC=1, et FLG_PRIV_NSEC=0), pour limiter la complexité des informations fournies. En effet, on peut considérer qu'un traitement de la violation de sécurité est hiérarchiquement supérieur à un traitement de la violation de privilège.

La septième ligne de la table de vérité de la figure 7A signifie qu'en sortie OUTPT, l'interruption de l'environnement sécurisée est générée IT_SEC=1 et le registre de statuts ILAC_STAT_FLG comporte un code représentatif d'une violation de la sécurité et du privilège d'une ressource sécurisée FLG_SEC=1, FLG_PRIV_SEC=1 ; lorsqu'en entrée INPT, il y a violation de sécurité ILAC_SEC=1 et de privilège ILAC_PRIV=1, par une transaction sécurisée ILAC_TRS_SEC=1.

Cela étant, dans ce cas en pratique, on pourra de ne pas coder la violation du privilège de la ressource (c'est-à-dire FLG_SEC=1, et FLG_PRIV_SEC=0), pour limiter la complexité des informations fournies. En effet, on peut là encore considérer qu'un traitement de la violation de sécurité est hiérarchiquement supérieur à un traitement de la violation de privilège.

On pourra par exemple en pratique coder dans le registre de statuts ILAC_STAT_FLG les trois cas suivants :
- une violation de privilège d'une ressource non-sécurisée (c'est-à-dire un accès non-sécurisé et non-privilégié à une ressource non-sécurisée et privilégiée) avec le bit FLG_PRIV_NSEC=1 ; ou
- une violation du privilège d'une ressource sécurisée (c'est-à-dire un accès sécurisé et non-privilégié à une ressource sécurisée et privilégiée) avec le bit FLG_PRIV_SEC=1 ; ou
- une violation de la sécurité d'une ressource (c'est-à-dire un accès non-sécurisé à une ressource, du type périphérique ou mémoire, sécurisée, ou bien un accès sécurisé à une mémoire non-sécurisée) avec le bit FLG_SEC=1.

On se réfère de nouveau à la figure 6.

Dans le système sur puce multi-coeurs symétrique SOC, le premier microprocesseur CPU1 peut, en outre et en particulier, être qualifié « de confiance » et sera notifié de la violation des droits d'accès relatifs aux identifiants de compartimentation CID.

L'unité de gestion d'accès illégaux IAC comporte à cet égard le circuit logique LOG (CID) de gestion des violations de compartimentation ILAC_CID, et est par exemple informée de l'identification dudit domaine de confiance TDCID, par un circuit de commande RIFSC du système d'isolation des ressources RIF.

L'unité de gestion d'accès illégaux IAC (le circuit logique LOG (CID) de gestion des violations de compartimentation) est configurée pour communiquer une troisième interruption IT_SEC_CID1 au microprocesseur CPU1 du premier domaine de confiance TDCID, en cas de détection d'une violation des droits d'accès de compartimentation ILAC_CID. C'est avantageusement à l'environnement sécurisé S du microprocesseur CPU1 du premier domaine de confiance TDCID qu'est communiquée la troisième interruption IT_SEC_CID1.

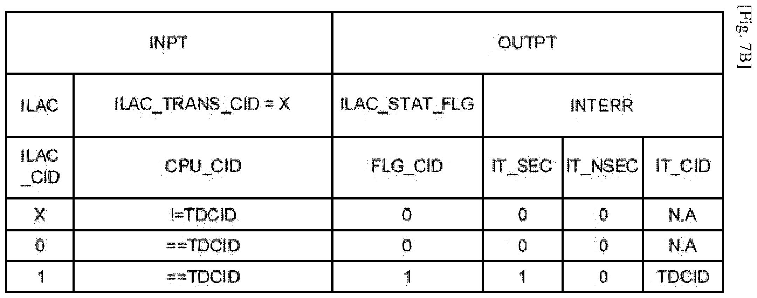

On se réfère à la figure 7B pour décrire les opérations logiques du circuit logique LOG (CID) de gestion des violations de compartimentation de l'unité IAC.

Ledit circuit logique LOG (CID) est configuré selon la table de vérité de la figure 7B, signifiant d'une part qu'aucune sortie OUTPT n'est générée en l'absence de violation de compartimentation ILAC_CID=0 et lorsque l'identifiant de compartimentation de la sous-unité de gestion CPU_CID ne correspond pas à celui du domaine de confiance TDCID, « CPU_CID != TDCID ».

La table de vérité de la figure 7B, signifie d'autre part que la troisième interruption d'environnement sécurisé IT_CID est générée vers le microprocesseur CPU1 du domaine de confiance TDCID, en cas de détection d'une violation des droits d'accès de compartimentation par une transaction « ILAC_CID=1 », quel que soit l'identifiant de cette transaction « ILAC_TRS_CID=X ».

Cela étant, dans les alternatives décrites précédemment en relation avec la figure 1 et en relation avec la figure 2, il n'y a notamment pas de condition particulière sur l'identifiant de compartimentation « ILAC_TRS_CID » et toutes les sorties OUTPT des circuits logiques LOG (SEC & PRIV), LOG (CID) de l'unité de gestion d'accès illégaux IAC sont communiquées au microprocesseur CPU1 du domaine de confiance TDCID.

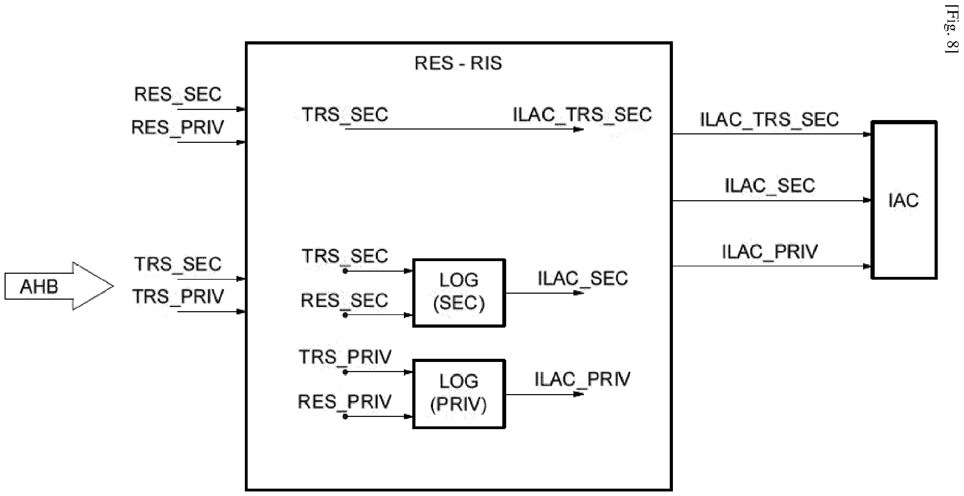

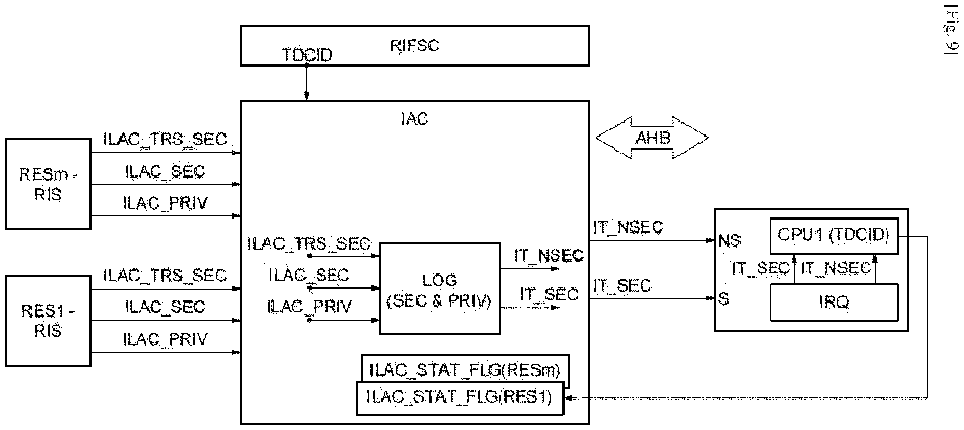

On se réfère à cet égard aux figures 8 et 9.

La figure 8 illustre un exemple de module de filtrage RES - RIS d'une ressource RES, tandis que la figure 9 illustre un exemple d'unité de gestion d'accès illégaux IAC ; qui sont notamment adaptés dans le cas de l'alternative mono-coeur (à un seul microprocesseur CPU1) décrite en relation avec la figure 1, et dans le cas de l'alternative multi-coeurs asymétrique décrite en relation avec la figure 2.

On rappelle que ces deux cas ne tiennent pas compte de condition particulière sur l'identifiant de compartimentation ILAC_TRS_CID et toutes les sorties OUTPT des circuit logique LOG (SEC) LOG (PRIV) sont communiquées au microprocesseur CPU1 du (« premier ») domaine de confiance TDCID.

Ainsi, d'une part, le module de filtrage RIS de la figure 8 comporte le premier circuit logique LOG (SEC) configuré selon la table de vérité de la figure 5A, le deuxième circuit logique LOG (PRIV) configuré selon la table de vérité de la figure 5B, tels que décrits ci-avant en relation avec la figure 4, et ne comporte pas nécessairement le troisième circuit logique LOG (CID). Le module de filtrage RIS est en outre configuré pour transférer la valeur du droit d'accès de sécurité de la transaction TRS_SEC pour fournir le deuxième signal d'erreur ILAC_TRS_SEC.

Et, d'autre part, l'unité de gestion d'accès illégaux IAC de la figure 9 est configurée de sorte que le registre de statuts ILAC_STAT_FLG, ILAC_STAT_FLG est accessible en lecture par le microprocesseur CPU1 du (« premier ») domaine de confiance TDCID, et contient ladite information numérique représentative desdits cas de violations relatifs à toutes les ressources RES1 - RESm de l'un quelconque desdits domaines, par une transaction engagée depuis l'un quelconque desdits domaines.

En outre, l'unité de gestion d'accès illégaux IAC est configurée de sorte que ladite première interruption IT_NSEC et ladite deuxième interruption IT_SEC sont toujours communiquées au microprocesseur CPU1 du (« premier ») domaine de confiance TDCID.

Dans l'alternative correspondant à l'architecture multi-coeurs asymétrique décrite précédemment en relation avec la figure 2, les opérations logiques du circuit logique LOG (CID) de gestion des violations de compartimentation de l'unité IAC sont également définies par la table de vérité de la figure 7B.

Enfin, dans le cas des figures 1 ou 2, une violation du droit d'accès de compartimentation ILAC_CID pourra néanmoins être détectée par le module de filtrage des ressources RES - RIS et communiqué à l'unité de gestion d'accès illégaux IAC. L'unité de gestion d'accès illégaux peut notamment être configurée, en cas de violation de la compartimentation, pour générer une interruption IT_SEC à l'environnement sécurisé du (« premier ») microprocesseur CPU1 du domaine de confiance TDCID.

## Revendications

1. Système sur puce (SOC) comportant :
- au moins un domaine de microprocesseur (CPU_DMN) comportant un microprocesseur (CPU) et au moins une ressource (RES) ; et
- un système d'isolation des ressources (RIF) comportant un module de filtrage (RIS) pour chaque ressource et configuré pour détecter une violation de droits d'accès de sécurité (SEC, NSEC), de privilège (PRIV, NPRIV), et éventuellement de compartimentation (CID) de la ressource, par des transactions arrivant à la ressource (RES),
le module de filtrage (RIS) étant configuré, en cas de violation d'au moins un droit d'accès de la ressource par une transaction, pour générer un premier signal d'erreur (ILAC_SEC, ILAC_PRIV, ILAC_CID) représentatif du droit d'accès violé de la ressource, et un deuxième signal d'erreur (ILAC_TRS_SEC, ILAC_TRS_CID) représentatif d'au moins un droit d'accès de cette transaction (TRS_SEC, TRS_CID).

2. Système sur puce selon la revendication 1, dans lequel le système d'isolation des ressources (RIF) comporte en outre une unité de gestion d'accès illégaux (IAC) configurée pour coder, à partir du premier signal d'erreur (ILAC_SEC, ILAC_PRIV, ILAC_CID) et du deuxième signal d'erreur (ILAC_TRS_SEC, ILAC_TRS_CID), dans un registre de statuts (ILAC_STAT_FLG) accessible en lecture par le microprocesseur (CPU), une violation des droits d'accès de sécurité d'une ressource (FLG_SEC), une violation des droits d'accès de privilège d'une ressource d'un environnement sécurisé (FLG_PRIV_SEC), et une violation des droits d'accès de privilège d'une ressource d'un environnement non-sécurisé (FLG_PRIV_NSEC).

3. Système sur puce selon la revendication 2, dans lequel l'unité de gestion d'accès illégaux (IAC) est configurée pour communiquer une première interruption (IT_NSEC) à un environnement non-sécurisé (NSEC) du microprocesseur (CPU), et/ou une deuxième interruption (IT_SEC) à un environnement sécurisé (SEC) du microprocesseur (CPU), en fonction du cas détecté de violation des droits d'accès (FLG_SEC, FLG_PRIV_SEC, FLG_PRIV_NSEC).

4. Système sur puce selon la revendication 3, dans lequel l'unité de gestion d'accès illégaux (IAC) est configurée pour générer la première interruption (IT_NSEC) en cas de violation des droits d'accès d'une ressource de l'environnement non-sécurisé (FLG_PRIV_NSEC), et pour générer la deuxième interruption (IT_SEC) en cas de violation des droits d'accès d'une ressource de l'environnement sécurisé (FLG_SEC, FLG_PRIV_SEC).

5. Système sur puce selon l'une des revendications 1 à 4, dans lequel ledit module de filtrage (RIS) est configuré, en cas de violation des droits d'accès de sécurité (SEC, NSEC) et/ou de privilège (PRIV, NPRIV) d'une ressource par une transaction, pour générer le deuxième signal d'erreur (ILAC_SEC) représentatif du droit d'accès de sécurité de cette transaction (ILAC_TRS_SEC).

6. Système sur puce selon l'une des revendications 1 à 5, comportant le premier domaine de microprocesseur (CPU_DMN) et au moins un deuxième domaine de microprocesseur (CPU_DMN2), dans lequel les ressources dudit premier domaine de microprocesseur (CPU_DMN1) et dudit au moins un deuxième domaine de microprocesseur (CPU_DMN2) ont des droits d'accès de compartimentation respectifs (CID1, CID2).

7. Système sur puce selon la revendication 6 prise en combinaison avec la revendication 2, le premier domaine de microprocesseur (CPU_DMN1) étant qualifié de confiance (TDCID), dans lequel l'unité de gestion d'accès illégaux (IAC) est configurée pour coder dans le registre de statuts (ILAC_STAT_FLG1, ILAC_STAT_FLG2), accessible en lecture par le microprocesseur (CPU1) dudit premier domaine de confiance (TDCID), chacun desdits cas de violation des droits d'accès (FLG_SEC, FLG_PRIV_SEC, FLG_PRIV_NSEC) d'une ressource de l'un quelconque desdits domaines, par une transaction engagée depuis l'un quelconque desdits domaines.

8. Système sur puce selon la revendication 7 prise en combinaison avec la revendication 3, dans lequel l'unité de gestion d'accès illégaux (IAC) est configurée pour communiquer ladite première interruption (IT_NSEC) et ladite deuxième interruption (IT_SEC) au microprocesseur (CPU1) dudit premier domaine de confiance (TDCID).

9. Système sur puce selon la revendication 6 prise en combinaison avec la revendication 2, dans lequel l'unité de gestion d'accès illégaux (IAC) est configurée pour coder dans un registre de statuts (ILAC_STAT_FLG1, ILAC_STAT_FLG2) respectivement dédiée à chacun des domaines (CPU_DMN1, CPU_DMN2), accessible en lecture par le microprocesseur (CPU1, CPU2) du domaine respectif, chacun desdits cas de violation des droits d'accès (FLG_SEC, FLG_PRIV_SEC, FLG_PRIV_NSEC) d'une ressource de l'un quelconque desdits domaines, par une transaction engagée depuis ledit domaine respectif (CPU_DMN1, CPU_DMN2).

10. Système sur puce selon la revendication 9 prise en combinaison avec la revendication 3, dans lequel l'unité de gestion d'accès illégaux (IAC) est configurée pour communiquer ladite première interruption (IT_NSEC) et ladite deuxième interruption (IT_SEC) au microprocesseur (CPU1, CPU2) dudit domaine respectif.

11. Système sur puce selon l'une des revendications 6 à 10 prise en combinaison avec la revendication 2, le premier domaine de microprocesseur (CPU_DMN1) étant qualifié de confiance (TDCID), dans lequel l'unité de gestion d'accès illégaux (IAC) est configurée pour communiquer une troisième interruption (IT_CID) au microprocesseur (CPU) du premier domaine de confiance (TDCID), en cas de détection d'une violation des droits d'accès de compartimentation (ILAC_CID).

12. Système sur puce selon l'une des revendications 6 à 10 prise en combinaison avec la revendication 5, dans lequel ledit module de filtrage (RIS) est configuré, en cas de violation des droits d'accès de sécurité (SEC, NSEC) et/ou de privilège (PRIV, NPRIV) d'une ressource par une transaction, pour générer le deuxième signal d'erreur (ILAC_TRS_CID) représentatif en outre du droit d'accès de compartimentation de cette transaction (TRS_CID).

13. Procédé de gestion de l'isolation de ressources d'un système sur puce (SOC), dans lequel :
- le système sur puce (SOC) comprend au moins un domaine de microprocesseur (CPU_DMN) comportant un microprocesseur (CPU) et au moins une ressource (RES) ; et
- le procédé comprend, pour chaque ressource, une détection d'une violation de droits d'accès de sécurité (SEC, NSEC), de privilège (PRIV, NPRIV), et éventuellement de compartimentation (CID) de la ressource, par des transactions arrivant à la ressource (RES),
et, en cas de violation d'au moins un droit d'accès de la ressource par une transaction, une génération d'un premier signal d'erreur (ILAC_SEC, ILAC_PRIV, ILAC_CID) représentatif du droit d'accès violé de la ressource, et d'un deuxième signal d'erreur (ILAC_TRS_SEC, ILAC_TRS_CID) représentatif d'au moins un droit d'accès de cette transaction (TRS_SEC, TRS_CID).

14. Procédé selon la revendication 13, comprenant en outre un codage, à partir du premier signal d'erreur (ILAC_SEC, ILAC_PRIV, ILAC_CID) et du deuxième signal d'erreur (ILAC_TRS_SEC, ILAC_TRS_CID), dans un registre de statuts (ILAC_STAT_FLG) accessible en lecture par le microprocesseur (CPU), d'une violation des droits d'accès de sécurité d'une ressource (FLG_SEC), d'une violation des droits d'accès de privilège d'une ressource d'un environnement sécurisé (FLG_PRIV_SEC), et d'une violation des droits d'accès de privilège d'une ressource d'un environnement non-sécurisé (FLG_PRIV_NSEC).

15. Procédé selon la revendication 14, comprenant en outre une communication d'une première interruption (IT_NSEC) à un environnement non-sécurisé (NSEC) du microprocesseur (CPU), et/ou d'une deuxième interruption (IT_SEC) à un environnement sécurisé (SEC) du microprocesseur (CPU), en fonction du cas détecté de violation des droits d'accès (FLG_SEC, FLG_PRIV_SEC, FLG_PRIV_NSEC).

16. Procédé selon la revendication 15, dans lequel la première interruption (IT_NSEC) est générée en cas de violation des droits d'accès d'une ressource de l'environnement non-sécurisé (FLG_PRIV_NSEC), et la deuxième interruption (IT_SEC) est générée en cas de violation des droits d'accès d'une ressource de l'environnement sécurisé (FLG_SEC, FLG_PRIV_SEC).

17. Procédé selon l'une des revendications 13 à 16, dans lequel, en cas de violation des droits d'accès de sécurité (SEC, NSEC) et/ou de privilège (PRIV, NPRIV) d'une ressource par une transaction, le deuxième signal d'erreur (ILAC_SEC) est représentatif du droit d'accès de sécurité de cette transaction (ILAC_TRS_SEC).

18. Procédé selon l'une des revendications 13 à 17, le système sur puce comportant le premier domaine de microprocesseur (CPU_DMN) et au moins un deuxième domaine de microprocesseur (CPU_DMN2), dans lequel les ressources dudit premier domaine de microprocesseur (CPU_DMN1) et dudit au moins un deuxième domaine de microprocesseur (CPU_DMN2) ont des droits d'accès de compartimentation respectifs (CID1, CID2).

19. Procédé selon la revendication 18 prise en combinaison avec la revendication 14, le premier domaine de microprocesseur (CPU_DMN1) étant qualifié de confiance (TDCID), dans lequel ledit codage est fait dans le registre de statuts (ILAC_STAT_FLG1, ILAC_STAT_FLG2) accessible en lecture par le microprocesseur (CPU1) dudit premier domaine de confiance (TDCID), pour chacun desdits cas de violation des droits d'accès (FLG_SEC, FLG_PRIV_SEC, FLG_PRIV_NSEC) d'une ressource de l'un quelconque desdits domaines, par une transaction engagée depuis l'un quelconque desdits domaines.

20. Procédé selon la revendication 19 prise en combinaison avec la revendication 15, dans lequel les communications de ladite première interruption (IT_NSEC) et de ladite deuxième interruption (IT_SEC) sont faites au microprocesseur (CPU1) dudit premier domaine de confiance (TDCID).

21. Procédé selon la revendication 18 prise en combinaison avec la revendication 14, dans lequel ledit codage est fait dans un registre de statuts (ILAC_STAT_FLG1, ILAC_STAT_FLG2) respectivement dédiée à chacun des domaines (CPU_DMN1, CPU_DMN2), accessible en lecture par le microprocesseur (CPU1, CPU2) du domaine respectif, pour chacun desdits cas de violation des droits d'accès (FLG_SEC, FLG_PRIV_SEC, FLG_PRIV_NSEC) d'une ressource de l'un quelconque desdits domaines, par une transaction engagée depuis ledit domaine respectif (CPU_DMN1, CPU_DMN2).

22. Procédé selon la revendication 21 prise en combinaison avec la revendication 15, dans lequel les communications de ladite première interruption (IT_NSEC) et de ladite deuxième interruption (IT_SEC) sont faites au microprocesseur (CPU1, CPU2) dudit domaine respectif.

23. Procédé selon l'une des revendications 18 à 22 prise en combinaison avec la revendication 14, le premier domaine de microprocesseur (CPU_DMN1) étant qualifié de confiance (TDCID), comprenant en outre une communication d'une troisième interruption (IT_CID) au microprocesseur (CPU) du premier domaine de confiance (TDCID), en cas de détection d'une violation des droits d'accès de compartimentation (ILAC_CID).

24. Procédé selon l'une des revendications 18 à 22 prise en combinaison avec la revendication 17, dans lequel, en cas de violation des droits d'accès de sécurité (SEC, NSEC) et/ou de privilège (PRIV, NPRIV) d'une ressource par une transaction, le deuxième signal d'erreur (ILAC_TRS_CID) est en outre représentatif du droit d'accès de compartimentation de cette transaction (TRS_CID).
